# EUROPEAN PATENT APPLICATION

(11) **EP 3 109 492 A1**
(43) Date of publication of application: **28.12.2016**
(21) Application number: 16175607.7
(22) Date of filing: 22.06.2016
(51) Int. Cl.: F16C 1/18

(54) **OPERATION LEVER AND CONTROL CABLE COUPLING STRUCTURE**

(30) Priority: 23.06.2015 JP 2015125595
(71) Applicant: NHK Spring Co., Ltd., Kanagawa 236-0004 (JP)
(72) Inventor: FURUSAWA, Masanobu, Yokohama-shi, 236-0004 Kanagawa (JP); SATO, Ryusuke, Yohohama-shi, 236-0004 Kanagawa (JP); ARAKAWA, Shinji, Yokohama-shi, 236-0004 Kanagawa (JP)
(74) Representative: DREISS Patentanwälte PartG mbB

(57) **Abstract**

An operation lever (16) and control cable (14) coupling structure, comprising: a control cable including one end side of an inner cable leading out from one end portion of an outer cable anchored to a base member, and including an end block fixed to one end portion of the inner cable; and an operation lever, wherein: the operation lever is attached to the base member so as to be capable of rotary operation, the control cable is disposed at an opposite side of the operation lever from a side toward which the operation lever is rotary operated, the inner cable is coupled to the operation lever by inserting the end block into an anchor hole opening in a rotary axis direction of the operation lever, the end block is prevented from coming out of the anchor hole by maintaining a state in which the one end side of the inner cable is fitted into a fitting groove opening (82,74A) toward a rotary radius direction outer side of the operation lever, irrespective of a rotary position of the operation lever with respect to the base member, and when the inner cable is coupled to the operation lever, the end block is inserted into the anchor hole in a flexed state (fig. 7B) of the one end side of the inner cable, and the one end side of the inner cable elastically recovers to fit into the fitting groove.

## Description

### BACKGROUND

### Technical Field

The present invention relates to a coupling structure between an operation lever for operating a slide mechanism, reclining mechanism, or the like of a vehicle seat, and a control cable.

### Related Art

Japanese Patent Application Laid-Open (JP-A) No. H10-220506 describes a control cable connecting device in which a cable end (end block) of an inner cable is hooked and fastened on a folded piece formed to a brake lever of a drum brake.

In this brake lever, a hammering sound is used to confirm that the cable end has been hooked securely onto the brake lever, and a leaf spring is attached in order to prevent the inner cable from coming out.

In the control cable connecting device described in JP-ANo. H10-220506, the inner cable is fastened (coupled) to the brake lever simply by hooking the cable end of the inner cable on the folded piece of the brake lever. An operation to couple the inner cable to the brake lever is accordingly easy. However, there is an increase in the number of components due to making configuration in which the inner cable is prevented from coming off the brake lever by the leaf spring attached to the brake lever.

In consideration of the above circumstances, an object of the present invention is to obtain a operation lever and control cable coupling structure enabling easy coupling of an inner cable to an operation lever, and also enabling the inner cable to be prevented from coming off the operation lever with a small number of components.

### SUMMARY

An operation lever and control cable coupling structure of the first aspect of the present invention, comprising: a control cable including one end side of an inner cable leading out from one end portion of an outer cable anchored to a base member, and including an end block fixed to one end portion of the inner cable; and an operation lever, wherein: the operation lever is attached to the base member so as to be capable of rotary operation, the control cable is disposed at an opposite side of the operation lever from a side toward which the operation lever is rotary operated, the inner cable is coupled to the operation lever by inserting the end block into an anchor hole opening in a rotary axis direction of the operation lever, the end block is prevented from coming out of the anchor hole by maintaining a state in which the one end side of the inner cable is fitted into a fitting groove opening toward a rotary radius direction outer side of the operation lever, irrespective of a rotary position of the operation lever with respect to the base member, and when the inner cable is coupled to the operation lever, the end block is inserted into the anchor hole in a flexed state of the one end side of the inner cable, and the one end side of the inner cable elastically recovers to fit into the fitting groove.

In the operation lever and control cable coupling structure of the first aspect of the present invention, the one end portion of the outer cable of the control cable is anchored to the base member. The one end side of the inner cable leads out from the one end portion of the outer cable, and the end block is fixed to the one end portion of the inner cable. Moreover, the operation lever is attached to the base member so as to be capable of rotary operation, and the control cable is disposed at the opposite side of the operation lever from the side toward which the operation lever is rotary operated.

The operation lever described above includes the anchor hole opening in the rotary axis direction, and the inner cable is coupled to the operation lever by inserting the end block into the anchor hole. The operation lever includes the fitting groove opening toward the rotary radius direction outside, and the one end side of the inner cable is fitted into the fitting groove. This fitted state is maintained irrespective of the rotary position of the operation lever with respect to the base member, thereby preventing the end block from coming out of the anchor hole. This thereby enables the cable to be prevented from coming away from the operation lever using a small number of components. Moreover, during coupling of the inner cable to the operation lever, the end block is inserted into the anchor hole in a flexed state of the one end side of the inner cable, and the one end side of the inner cable elastically recovers to fit into the fitting groove. This thereby enables easy coupling of the inner cable to the operation lever.

The operation lever and control cable coupling structure of the second aspect of the present invention, wherein: the operation lever includes a guide portion extending out from an edge portion of the anchor hole toward one side in the rotary axis direction; and during insertion of the end block into the anchor hole, the guide portion slides against the end block and guides insertion of the end block.

According to the operation lever and control cable coupling structure of the second aspect of the present invention, during insertion of the end block into the anchor hole, the guide portion extending out from the edge portion of the anchor hole toward the one side in the rotary axis direction slides against the end block. Insertion of the end block into the anchor hole is thereby guided, thereby enabling an even easier coupling operation of the inner cable to the operation lever.

The operation lever and control cable coupling structure of the third aspect of the present invention, wherein the operation lever includes: a lever body that is attached to the base member so as to be capable of rotary operation; and an inner cable coupling section that extends out from the lever body toward the opposite side, and that includes a pair of wall portions facing each other in the rotary axis direction across the fitting groove, wherein an inner peripheral face of the anchor hole formed at one of the wall portions and an inner peripheral face of a notch formed at the other of the wall portions contact an outer peripheral face of the end block.

In the operation lever and control cable coupling structure of the third aspect of the present invention, the lever body of the operation lever is attached to the base member so as to be capable of rotary operation. The inner cable coupling section extends out from the lever body toward the opposite side to the rotary operation direction of the lever body, namely toward the side of the control cable. The inner cable coupling section includes the pair of wall portions facing each other in the rotary axis direction of the lever body across the fitting groove into which the one end portion of the inner cable is fitted. The end block is inserted into the anchor hole formed at one of the wall portions, and the inner peripheral face of the anchor hole and the inner peripheral face of the notch formed at the other of the wall portions contact the outer peripheral face of the end block. This thereby enables the inner cable to be pulled with good balance during rotary operation of the lever body, due to the pair of wall portions.

The operation lever and control cable coupling structure of the fourth aspect of the present invention, wherein the operation lever includes a reinforcement portion that extends out from the inner cable coupling section in the rotary axis direction, and that is connected to the lever body.

In the operation lever and control cable coupling structure of the fourth aspect of the present invention, the reinforcement portion provided to the operation lever extends from the inner cable coupling section in the rotary axis direction of the lever body, and is connected to the lever body. The inner cable coupling section is supported in the rotary axis direction of the lever body by the reinforcement portion, thereby enabling deformation of the inner cable coupling section in the rotary axis direction to be prevented or suppressed even in cases in which the inner cable coupling section is set with a small dimension along the rotary axis direction.

The operation lever and control cable coupling structure of the fifth aspect of the present invention, wherein: the base member includes an anchor groove into which the one end portion of the outer cable is fitted and anchored; and the one end portion of the outer cable can be fitted into the anchor groove after coupling the inner cable to the operation lever.

In the operation lever and control cable coupling structure of the fifth aspect of the present invention, the above configuration enables the coupling operation of the inner cable to the operation lever to be performed before fitting and anchoring the one end portion of the outer cable in the anchor groove of the base member. This thereby enables an even easier coupling operation of the inner cable to the operation lever.

As described above, the operation lever and control cable coupling structure according to the present invention enables easy coupling of the inner cable to the operation lever, and also enables the inner cable to be prevented from coming off the operation lever with a small number of components.

### BRIEF DESCRIPTION OF THE DRAWINGS

Fig. 1 is a front view illustrating an operation lever and control cable coupling structure according to an exemplary embodiment of the present invention.
Fig. 2 is a side view illustrating the same coupling structure.
Fig. 3 is a perspective view illustrating the same coupling structure.
Fig. 4 is a perspective view corresponding to Fig. 3, illustrating a state in which an outer cable, this being a configuration member of the same coupling structure, has been detached from a base member.
Fig. 5 is a perspective view illustrating portions of an operation lever and part of a control cable, these being configuration members of the same coupling structure.
Fig. 6A is a plan view illustrating the same operation lever.
Fig. 6B is a side view illustrating the same operation lever.
Fig. 6C is a back face view illustrating the same operation lever.
Fig. 7A is an enlarged side view illustrating an enlargement of coupling structure of the same operation lever and an inner cable.
Fig. 7B is an enlarged side view corresponding to Fig. 7A, illustrating a state in which one end side of the inner cable has been flexed.
Fig. 8 is a cross-section taken along line F8-F8 in Fig. 1.
Fig. 9 is a cross-section corresponding to Fig. 8, illustrating a state in which an operation lever has been rotary operated.

### DETAILED DESCRIPTION

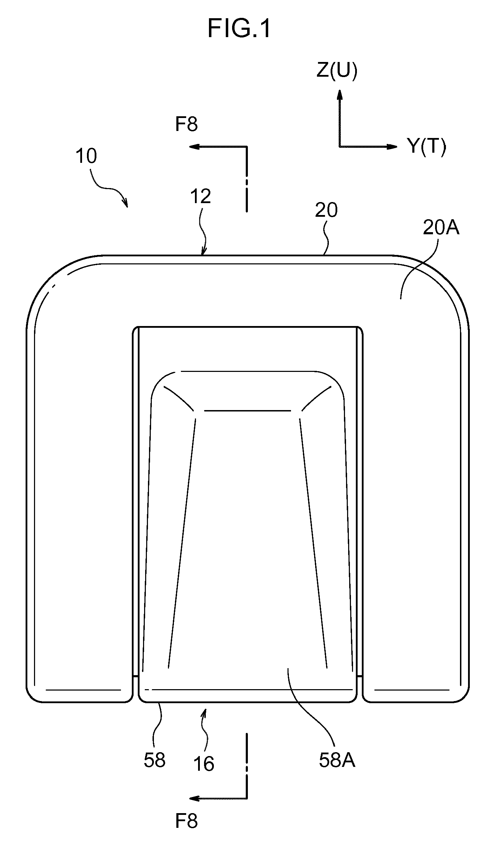

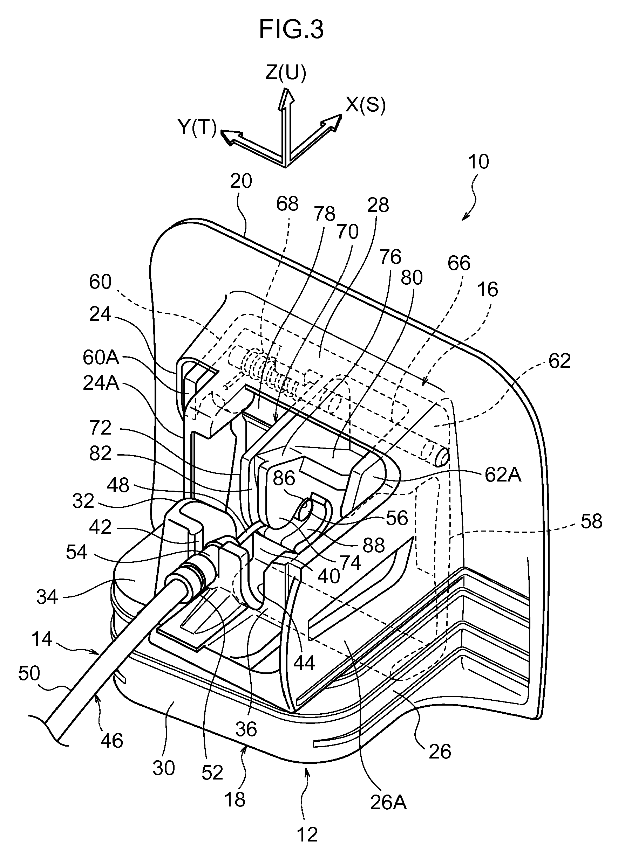

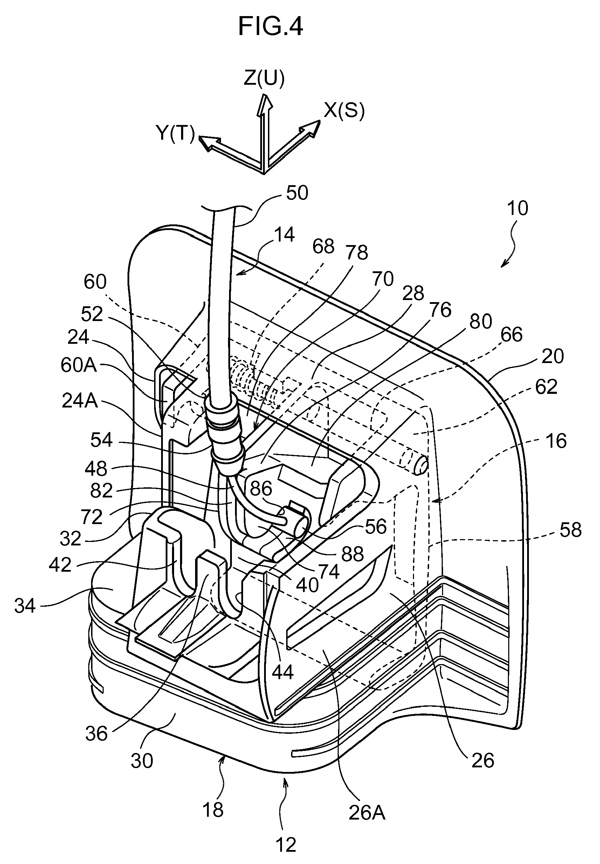

Explanation follows regarding an operation lever and control cable coupling structure 10 (referred to below simply as "coupling structure 10") according to an exemplary embodiment of the present invention, with reference to Fig. 1 to Fig. 9.

As illustrated in Fig. 1 to Fig. 4 as appropriate, the coupling structure 10 according to the present exemplary embodiment is configured by a base member 12, a control cable 14, and an operation lever 16. The base member 12, the control cable 14, and the operation lever 16 are configuration members of a vehicle seat, not illustrated in the drawings, and the operation lever 16 and the control cable 14 are used to operate a slide mechanism, a reclining mechanism, or the like provided to the vehicle seat. Detailed explanation follows regarding each of the configuration members mentioned above.

### Base Member Configuration

The base member 12 is a member attached to the vehicle seat at a specific location (for example, at an upper end portion of a seatback), and is formed from resin in this example. Note that the arrows X, Y, and Z illustrated as appropriate in the drawings indicate a front direction, a left direction, and an upward direction of the base member 12 respectively. The front direction X, the left direction Y, and the upward direction Z are employed as appropriate in order to explain the configuration of the base member 12, and do not indicate directions relative to the vehicle seat in an attached state of the base member 12 to the vehicle seat. In the following explanation of the configuration of the base member 12, reference to the front, rear, left, right, upward, and downward directions indicates the directions of the base member 12.

The base member 12 is configured by a member body 18 and a flange portion 20. The member body 18 is formed in a substantially box shape opening at a front side and a lower side of the base member 12. The flange portion 20 extends from a front edge portion of the member body 18 toward both left and right sides and the upper side of the base member 12, and substantially forms an inverted U-shape in front view of the base member 12 illustrated in Fig. 1. A surface (front face) 20A of the flange portion 20 forms a design face of the vehicle seat.

The member body 18 includes a left wall 24, a right wall 26, and an upper wall 28 that extend out integrally from an inside edge portion of the flange portion 20 toward a rear side of the base member 12, and includes a rear wall 30 that integrally couples together rear end portions of the left wall 24 and the right wall 26 along the left-right direction of the base member 12 at a lower portion side of the base member 12. The left wall 24 and the right wall 26 face each other in the left-right direction of the base member 12, and the upper wall 28 couples upper end portions of the left wall 24 and the right wall 26 integrally together along the left-right direction of the base member 12. In the left wall 24, a location further to the upper side than the rear wall 30 is notched toward the front side of the base member 12, and a rear portion of this upper side location configures an inside recessed portion 24A that is recessed toward the right side of the base member 12 in a stepped shape. In the right wall 26, a rearward extending portion 26A provided further to the upper side than the rear wall 30 extends further to the rear side of the base member 12 than the rear wall 30.

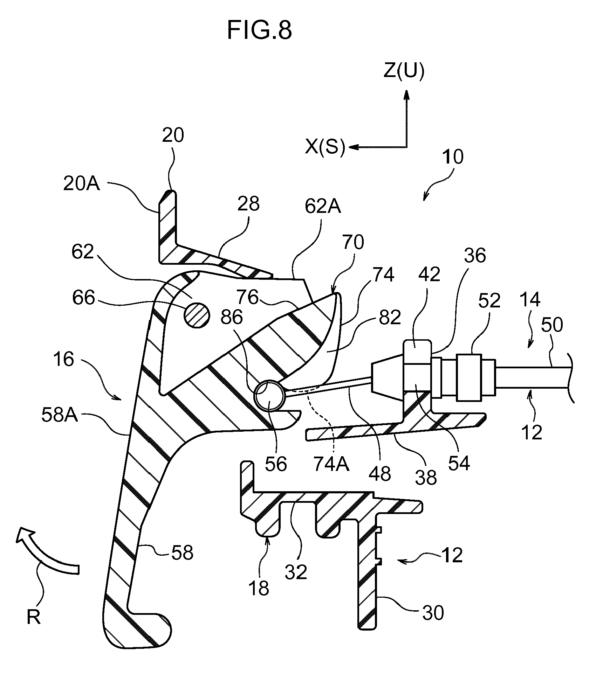

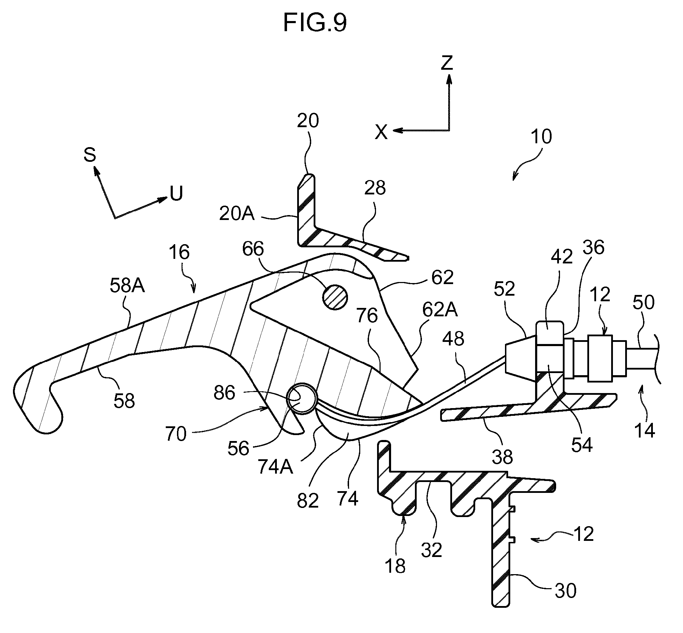

The rearward extending portion 26A of the right wall 26 faces a vertical wall 32 provided at a left-right direction intermediate portion of the base member 12. The vertical wall 32 and a lower end portion of the rearward extending portion 26A are integrally coupled together by a horizontal wall 34 extending in the left-right direction of the base member 12. The horizontal wall 34 is integrally contiguous to the left wall 24, the right wall 26, and the rear wall 30. The vertical wall 32 and an upper portion side of a rear end portion of the rearward extending portion 26A are integrally coupled in the left-right direction of the base member 12 by an outer cable anchor wall 36. An intermediate wall 38 (see Fig. 8 and Fig. 9) extends integrally from a lower end portion of the outer cable anchor wall 36 toward the front side of the base member 12. The intermediate wall 38 is integrally contiguous to the rearward extending portion 26A, the vertical wall 32, and the inside recessed portion 24A.

An operation opening 40 is formed between the outer cable anchor wall 36 and the upper wall 28. The operation opening 40 is surrounded by the outer cable anchor wall 36, the upper wall 28, the vertical wall 32, and the rearward extending portion 26A, and is open toward the upper side of the base member 12. The outer cable anchor wall 36 is formed with a pair of left and right anchor grooves 42, 44 notched from an upper edge toward a lower side edge of the outer cable anchor wall 36. Out of the anchor grooves 42, 44, the anchor groove 42 positioned on the left side of the base member 12, is aligned with an outer cable 46 of the control cable 14.

### Control Cable Configuration

The control cable 14 is a Bowden cable, and includes the outer cable 46 described above, and an inner cable 48 slidably inserted through the outer cable 46. The outer cable 46 is also referred to as a cable outer or an outer casing, and includes an outer cable body 50 formed in a tube shape, and a cylinder shaped terminal member 52 joined (fixed) to one end portion of the outer cable body 50. An outer peripheral portion of the terminal member 52 is formed with a circumferential groove 54 extending around a circumferential direction, and the portion of the terminal member 52 formed with the circumferential groove 54 is fitted into the anchor groove 42 described above. The one end portion of the outer cable 46 is thereby anchored to the outer cable anchor wall 36 of the base member 12.

One end side of the inner cable 48, configured by a wire, leads out from the one end portion of the outer cable 46. A circular cylinder shaped metal end block 56 is fixed to one end portion of the inner cable 48. The end block 56 is fixed to the one end portion of the inner cable 48 such that the axial direction of the metal end block 56 runs in an orientation orthogonal to the axial direction of the inner cable 48, and the metal end block 56 projects out toward both axial-orthogonal direction sides with respect to the one end portion of the inner cable 48. The inner cable 48 and the end block 56 are aligned with the operation lever 16 that is attached to the base member 12 so as to be capable of rotary operation.

### Operation Lever Configuration

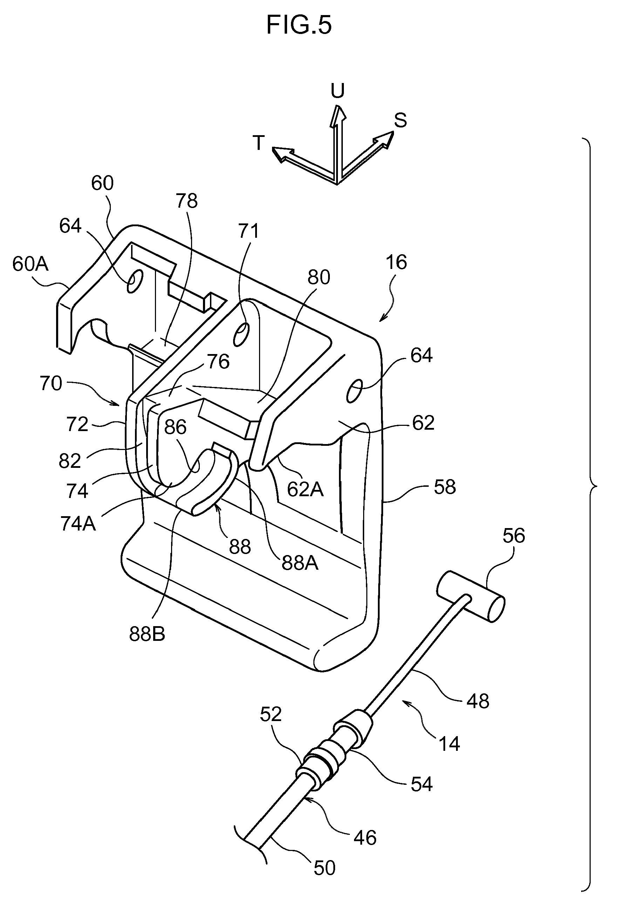

The operation lever 16 is formed from a resin in this example, and as illustrated in Fig. 5 to Fig. 6C, the operation lever 16 includes a lever body 58 formed substantially in an elongated plate shape. Note that the arrows S, T, and U shown as appropriate in the drawings respectively indicate the front direction, left direction, and upward direction of the operation lever 16. The front direction S, the left direction T, and the upward direction U are employed as appropriate in order to explain the configuration of the operation lever 16, and do not indicate directions relative to the vehicle seat, nor directions with respect to the base member 12, in an attached state of the operation lever 16 to the vehicle seat through the base member 12. In the following explanation of the configuration of the operation lever 16, reference to the front, rear, left, right, upward, and downward directions indicates the directions of the operation lever 16.

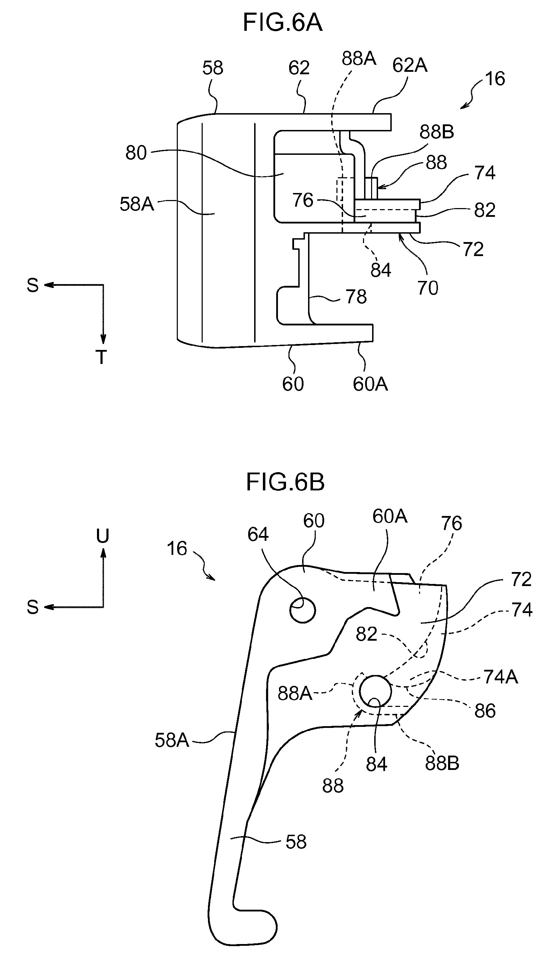

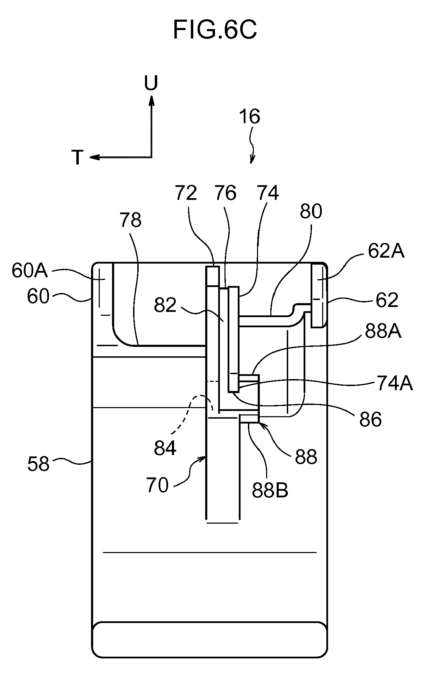

The lever body 58 described above is formed in a shape capable of being housed inside the flange portion 20 of the base member 12. A surface (front face) 58A of the lever body 58 forms a design face of the vehicle seat, together with the surface 20A of the flange portion 20. A pair of rotary coupling portions 60, 62 extend out from both width direction end portions (both left-right direction end portions) of one length direction end portion (an upper end portion) of the lever body 58 toward a back side (rear side) of the lever body 58. Each of the pair of rotary coupling portions 60, 62 is formed with a shaft bearing hole 64 (reference numerals are omitted except for in Fig. 5 and Fig. 6B). A support shaft 66 is inserted through the shaft bearing holes 64 so as to permit rotation.

The support shaft 66 is disposed at an upper end side of the base member 12 in an orientation with its axial direction running along the left-right direction of the base member 12. One axial direction end portion of the support shaft 66 is fixed to an upper end portion of the left wall 24, and another axial direction end portion of the support shaft 66 is fixed to an upper end portion of the right wall 26. The upper end portion of the operation lever 16 is thereby attached to the base member 12 through the support shaft 66 so as to be capable of rotating. A rotary axis direction of the operation lever 16 corresponds to the left-right direction of the base member 12.

Respective stoppers 60A, 62A are provided to leading end sides (rear end sides) of the rotary coupling portions 60, 62. The stoppers 60A, 62A engage with the left wall 24 and the right wall 26 of the base member 12 so as to configure a limited rotary range of the operation lever 16 with respect to the base member 12 between a normal position illustrated in Fig. 8, and an operated position (released position) illustrated in Fig. 9.

A torsion coil spring 68 is attached to the support shaft 66 described above. One end portion of the torsion coil spring 68 is anchored to the left wall 24 of the base member 12, and the other end portion of the torsion coil spring 68 is anchored to the operation lever 16. The torsion coil spring 68 biases the operation lever 16 toward the normal position. The operation lever 16 is accordingly normally retained at the normal position. In a state in which the operation lever 16 is positioned at the normal position, the lever body 58 is disposed inside the flange portion 20 in an orientation in which the length direction (up-down direction) of the lever body 58 runs along the up-down direction of the base member 12, and the surface 5 8A of the lever body 58 is disposed substantially in the same plane as the surface 20A of the flange portion 20.

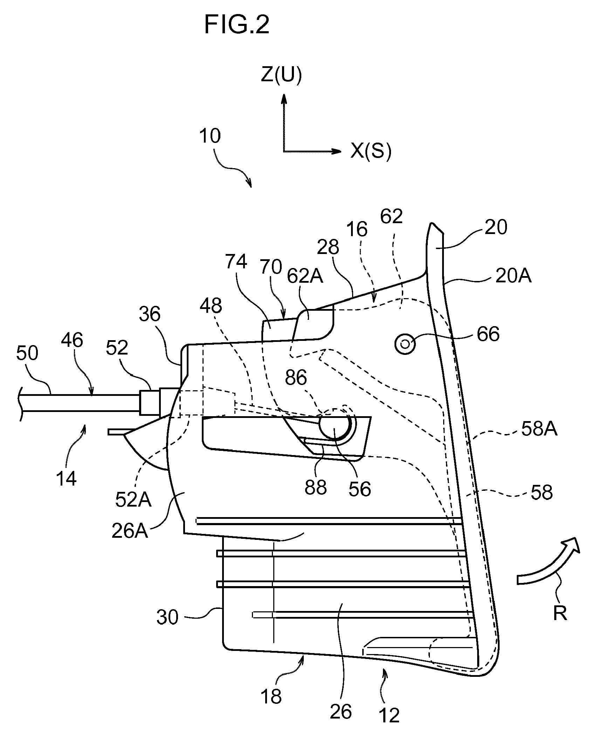

When an occupant rotary operates the operation lever 16, the operation lever 16 is pulled in the arrow R direction in Fig. 2 and Fig. 8 against the biasing force of the torsion coil spring 68, and the operation lever 16 is swung to the operated position. Note that the control cable 14 described above is disposed at the opposite side to the side toward which the operation lever 16 is rotary operated.

The operation lever 16 described above includes an inner cable coupling section 70 that extends integrally from one length direction end side (upper end side) of the lever body 58 toward the back side (the opposite side to the side toward which the operation lever 16 is rotary operated; rear side) of the lever body 58. The inner cable coupling section 70 is formed in a plate shape overall, and is disposed with its plate thickness direction in the rotary axis direction of the operation lever 16. A base end portion of the inner cable coupling section 70 is formed with a shaft bearing hole 71 through which the support shaft 66 is rotatably inserted.

The inner cable coupling section 70 includes a pair of wall portions 72, 74 that face each other in the left-right direction of the operation lever 16, and a connecting portion 76 that is disposed between the pair of wall portions 72, 74 and that connects the pair of wall portions 72, 74 together along the left-right direction of the operation lever 16. A plate shaped reinforcement portion 78 extends out integrally from a base end portion of the one wall portion 72 toward the left side (rotary axis direction other side) of the operation lever 16. The reinforcement portion 78 is integrally connected to the one rotary coupling portion 60 and the lever body 58. Similarly, a substantially plate shaped reinforcement portion 80 extends out integrally from a base end side of the other wall portion 74 toward the right side (rotary axis direction one side) of the operation lever 16. The reinforcement portion 80 is formed larger than the reinforcement portion 78 described above, and is integrally connected to the other rotary coupling portion 62 and the lever body 58.

Edge portions (rear edge portions) of the pair of wall portions 72, 74 on the opposite side to the lever body 58 are formed in circular arc shapes following the rotary direction of the operation lever 16 (the arrow R direction illustrated in Fig. 2 and Fig. 8, and the opposite direction to the arrow R direction). The connecting portion 76 is recessed further toward the lever body 58 side than the wall portions 72, 74. Accordingly, a rear edge portion of the inner cable coupling section 70 forms a fitting groove 82 extending in the rotary direction of the operation lever 16. The fitting groove 82 is open toward a rotary radius direction outside of the operation lever 16, and sides of the rear edges of the pair of wall portions 72, 74 face each other across the fitting groove 82, along the rotary axis direction of the operation lever 16.

As illustrated in Fig. 6A to Fig. 6C, a lower edge side and rear edge side of the one wall portion 72 is formed with a circular anchor hole 84. The anchor hole 84 opens in the left-right direction (rotary axis direction) of the operation lever 16. The diameter of the anchor hole 84 is set slightly larger than the diameter of the end block 56. Moreover, a lower edge side and rear edge side of the other wall portion 74 is formed with a notch 86 that is notched in from the rear edge of the other wall portion 74. A location of the notch 86 disposed facing the anchor hole 84 is formed in a substantially circular shape concentric to the anchor hole 84.

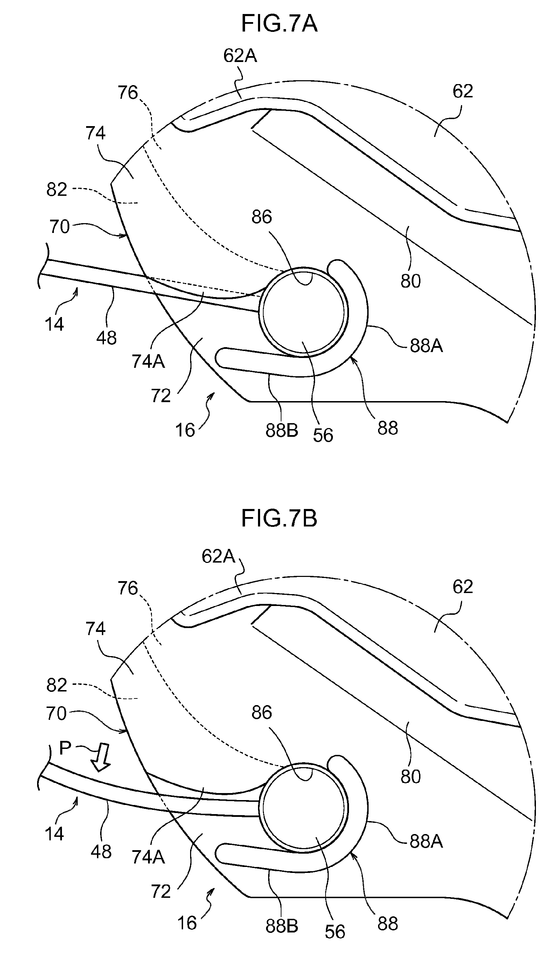

As illustrated in Fig. 5 to Fig. 7B, a rear edge side of the inner cable coupling section 70 is provided with a guide portion 88 extending out toward the right side (rotary axis direction one side) of the operation lever 16. The guide portion 88 extends out integrally from an edge portion of the anchor hole 84 and an edge portion of the notch 86, and is configured by a circular arc shaped circular arc portion 88A opening toward the rear side of the operation lever 16, and a flat plate shaped plate shaped portion 88B extending from a lower end of the circular arc portion 88A toward the rear side of the operation lever 16. An inner peripheral face of the circular arc portion 88A is a curved face integrally contiguous to inner peripheral faces of the anchor hole 84 and the notch 86.

The one end portion of the inner cable 48 described above is coupled to the inner cable coupling section 70 configured as described above, and the inner cable 48 is configured to slide with respect to the outer cable 46 when the operation lever 16 is rotary operated. Specifically, one axial direction end side of the end block 56 fixed to the one end portion of the inner cable 48 is inserted into the anchor hole 84 described above. Radial direction movement of the end block 56 with respect to the inner cable coupling section 70 is thereby restricted, and the inner cable 48 is coupled to the inner cable coupling section 70.

The one end side of the inner cable 48 is fitted into the fitting groove 82 described above. Displacement of the one end side of the inner cable 48 and the end block 56 in the rotary axis direction of the operation lever 16 is thereby restricted, and the end block 56 is prevented from coming out of the anchor hole 84. As illustrated by an intermittent line in Fig. 6B, the fitting groove 82 is formed with a depth that becomes shallower on progression toward the upper end side of the operation lever 16, and a bottom face configured by a rear edge of the connecting portion 76 curves in a circular arc shape to form a protrusion toward the rear side of the operation lever 16.

A state in which the one end side of the inner cable 48 is fitted into the fitting groove 82 is maintained irrespective of the rotary position of the operation lever 16 with respect to the base member 12. Specifically, as illustrated in Fig. 2, Fig. 3, Fig. 7A, and Fig. 8, in a state in which the operation lever 16 is positioned at the normal position, a lower end portion of the one wall portion 72 faces the one end side of the inner cable 48 from the left side (rotary axis direction other side) of the operation lever 16, and an wrap portion 74A of the other wall portion 74, configuring an upper edge portion of the notch 86, faces the one end side of the inner cable 48 from the right side (rotary axis direction one side) of the operation lever 16.

When the operation lever 16 is swung toward the operated position side, the one end side of the inner cable 48 enters deep inside the fitting groove 82, and a state in which the one end side of the inner cable 48 is deep inside of the fitting groove 82 is maintained even in a state in which the operation lever 16 has reached the operated position (see Fig. 9).

In a coupled state of the inner cable 48 to the inner cable coupling section 70 as described above, an outer peripheral face of one axial direction end side of the end block 56 contacts an inner peripheral face of the anchor hole 84, and an outer peripheral face on the other axial direction end side of the end block 56 contacts an inner peripheral face of the notch 86. Configuration is made such that during rotary operation of the operation lever 16, load from the inner cable 48 is dispersed into the pair of wall portions 72, 74 through the end block 56.

Next, explanation follows regarding a coupling operation of the inner cable 48 to the operation lever 16. This coupling operation is, for example, performed in a state in which the operation lever 16 has been pre-attached to the base member 12, and the one end portion of the outer cable 46 is not anchored to the base member 12. First, the one end side of the inner cable 48 is inserted through the operation opening 40 of the base member 12, and the end block 56 is abutted against the circular arc portion 88A of the guide portion 88. The end block 56 is thereby positioned coaxially to the anchor hole 84. In this state, the one end side of the inner cable 48 abuts the wrap portion 74A of the wall portion 74, preventing insertion of the end block 56 into the anchor hole 84. A worker therefore uses a finger, a tool, or the like to flex the one end side of the inner cable 48 toward the lower side of the operation lever 16 (see the arrow P in Fig. 7B). The obstacle described above is thereby removed, enabling insertion of the end block 56 into the anchor hole 84.

When inserting the end block 56 into the anchor hole 84, the guide portion 88 slides against the end block 56, thereby guiding insertion of the end block 56. When the one end side of the inner cable 48 abuts the wall portion 72, the inner cable 48 is facing the fitting groove 82 in the rotary radius direction of the operation lever 16. In this state, when force flexing the one end side of the inner cable 48 is released, the one end side of the inner cable 48 elastically recovers and fits into the fitting groove 82. The terminal member 52 of the outer cable 46 is then fitted into and anchored to the anchor groove 42 of the base member 12.

### Operation and Advantageous Effects

Next, explanation follows regarding operation and advantageous effects of the present exemplary embodiment.

In the present exemplary embodiment, the one end portion of the outer cable 46 of the control cable 14 is anchored to the outer cable anchor wall 36 of the base member 12. The one end side of the inner cable 48 leads out from the one end portion of the outer cable 46, and the end block 56 is fixed to the one end portion of the inner cable 48. Moreover, the operation lever 16 is attached to the base member 12 so as to be capable of rotating, and the control cable 14 is disposed at the opposite side to the side toward which the operation lever 16 is rotary operated.

The operation lever 16 includes the anchor hole 84 opening in the rotary axis direction. The inner cable 48 is coupled to the operation lever 16 by inserting the end block 56 into the anchor hole 84. The operation lever 16 includes the fitting groove 82 opening toward the rotary radius direction outside, and the one end side of the inner cable 48 is inserted into the fitting groove 82. This inserted state is maintained irrespective of the rotary position of the operation lever 16 with respect to the base member 12, thereby preventing the end block 56 from coming out from the anchor hole 84. The inner cable 48 can accordingly be prevented from coming away from the operation lever 16 with a small number of components.

Moreover, during coupling of the inner cable 48 to the operation lever 16, the end block 56 is inserted into the anchor hole 84 in a flexed state of the one end side of the inner cable 48, and the one end side of the inner cable 48 elastically recovers to fit into the fitting groove 82. In this manner, during insertion of the end block 56 into the anchor hole 84, it is sufficient simply to elastically flex the inner cable 48, thereby enabling easy coupling of the inner cable 48 to the operation lever 16.

According to the present exemplary embodiment, during insertion of the end block 56 into the anchor hole 84, the guide portion 88 extending out from an end portion of the anchor hole 84 toward the rotary axis direction one side of the operation lever 16 slides against the end block 56. Insertion of the end block 56 into the anchor hole 84 is accordingly guided, thereby enabling an even easier coupling operation of the inner cable 48 to the operation lever 16.

Further, in the present exemplary embodiment, the inner cable coupling section 70 of the operation lever 16 is provided with the pair of wall portions 72, 74 facing each other across the fitting groove 82 in the rotary axis direction of the lever body 58. The end block 56 is inserted into the anchor hole 84 formed at the one wall portion 72, and the inner peripheral face of the anchor hole 84 and the inner peripheral face of the notch 86 formed in the other wall portion 74 contact the outer peripheral face of the end block 56. This thereby enables the inner cable 48 to be pulled with good balance during rotary operation of the lever body 58, due to the pair of wall portions 72, 74.

In the present exemplary embodiment, the reinforcement portions 78, 80 provided to the operation lever 16 extend from the inner cable coupling section 70 in the rotary axis direction of the lever body 58, and are connected to the lever body 58. The inner cable coupling section 70 is supported in the rotary axis direction of the lever body 58 by the reinforcement portions 78, 80, thereby enabling deformation of the inner cable coupling section 70 in the rotary axis direction to be prevented or suppressed, even when the inner cable coupling section 70 is set with a small dimension along the rotary axis direction.

In the present exemplary embodiment, the base member 12 includes the anchor groove 42 into which the one end portion of the outer cable 46 is fitted and anchored, and the one end portion of the outer cable 46 can be fitted into the anchor groove 42 after coupling the inner cable 48 to the operation lever 16. This thereby enables the coupling operation of the inner cable 48 to the operation lever 16 to be performed before fitting and anchoring the one end portion of the outer cable 46 to the anchor groove 42 of the base member 12. This thereby enables an even easier coupling operation of the inner cable 48 to the operation lever 16.

Note that in the exemplary embodiment described above, explanation has been given regarding a case in which the one end portion of the outer cable 46 is anchored to the base member 12 after coupling the inner cable 48 to the operation lever 16. However, the present invention is not limited thereto, and the inner cable 48 may be coupled to the operation lever 16 after anchoring the one end portion of the outer cable 46 to the base member 12.

The exemplary embodiment described above has a configuration in which the operation lever 16 is provided with the reinforcement portions 78, 80. However, the present invention is not limited thereto, and configuration may be made in which the reinforcement portions 78, 80 are omitted. In such cases, for example, a thickness dimension of the inner cable coupling section 70 along the rotary axis direction of the operation lever 16 is set thicker in order to secure the strength of the inner cable coupling section 70.

The exemplary embodiment described above has a configuration in which the operation lever 16 includes the inner cable coupling section 70 provided with the pair of wall portions 72, 74. However, the present invention is not limited thereto, and it is sufficient that the operation lever 16 is formed with the anchor hole 84 and the fitting groove 82. The configuration in the vicinity of the anchor hole 84 and the fitting groove 82 may be modified as appropriate.

In the exemplary embodiment described above, the operation lever 16 has a configuration provided with the guide portion 88. However, the present invention is not limited thereto, and configuration may be made with the guide portion 88 omitted.

Various other modifications may be implemented within a range not departing from the spirit of the present invention. Obviously, the scope of rights of the present invention is not limited by the above exemplary embodiment.

## Claims

1. An operation lever and control cable coupling structure, comprising:
a control cable including one end side of an inner cable leading out from one end portion of an outer cable anchored to a base member, and including an end block fixed to one end portion of the inner cable; and
an operation lever, wherein:
the operation lever is attached to the base member so as to be capable of rotary operation,
the control cable is disposed at an opposite side of the operation lever from a side toward which the operation lever is rotary operated,
the inner cable is coupled to the operation lever by inserting the end block into an anchor hole opening in a rotary axis direction of the operation lever,
the end block is prevented from coming out of the anchor hole by maintaining a state in which the one end side of the inner cable is fitted into a fitting groove opening toward a rotary radius direction outer side of the operation lever, irrespective of a rotary position of the operation lever with respect to the base member, and
when the inner cable is coupled to the operation lever, the end block is inserted into the anchor hole in a flexed state of the one end side of the inner cable, and the one end side of the inner cable elastically recovers to fit into the fitting groove.

2. The operation lever and control cable coupling structure of claim 1, wherein:
the operation lever includes a guide portion extending out from an edge portion of the anchor hole toward one side in the rotary axis direction; and
during insertion of the end block into the anchor hole, the guide portion slides against the end block and guides insertion of the end block.

3. The operation lever and control cable coupling structure of either claim 1 or claim 2, wherein the operation lever includes:
a lever body that is attached to the base member so as to be capable of rotary operation; and
an inner cable coupling section that extends out from the lever body toward the opposite side, and that includes a pair of wall portions facing each other in the rotary axis direction across the fitting groove,
wherein an inner peripheral face of the anchor hole formed at one of the wall portions and an inner peripheral face of a notch formed at the other of the wall portions contact an outer peripheral face of the end block.

4. The operation lever and control cable coupling structure of claim 3, wherein the operation lever includes a reinforcement portion that extends out from the inner cable coupling section in the rotary axis direction, and that is connected to the lever body.

5. The operation lever and control cable coupling structure of any one of claim 1 to claim 4, wherein:
the base member includes an anchor groove into which the one end portion of the outer cable is fitted and anchored; and
the one end portion of the outer cable can be fitted into the anchor groove after coupling the inner cable to the operation lever.
